# EUROPEAN PATENT APPLICATION

(11) **EP 2 238 843 A1**
(43) Date of publication of application: **13.10.2010**
(21) Application number: 10001562.7
(22) Date of filing: 12.02.2010
(51) Int. Cl.: A23L 1/305, A23L 1/30, A23L 1/302, A23L 1/0522, A23L 1/0562, A23L 1/303, A23L 1/035, A23L 1/0524, A61K 47/48, B01J 13/14, C07K 14/00

(54) **Compositions of fat-soluble active ingredients containing protein-polysaccharide conjugates**

(30) Priority: 26.02.2009 CN 200910118612
(71) Applicant: DSM IP Assets B.V., 6411 TE Heerlen (NL)
(72) Inventor: Chen, Chyi-Cheng, 4102 Binningen (CH); Leuenberger, Bruno H., 4310 Rheinfelden (CH); Wagner, Gerhard, 79664 Wehr (DE); Xu, Keke, 200433 Shanghai (CN); Yao, Ping, 200433 Shanghai (CN)
(74) Representative: Rabanus, Birgit

(57) **Abstract**

The present invention relates to compositions containing one or more proteins, one or more polysaccharides and one or more fat-soluble active ingredients and their use for the enrichment, fortification and/or coloration of food beverages, animal feed and/or cosmetics.

## Description

The present invention relates to compositions containing one or more proteins, one or more polysaccharides and one or more fat-soluble active ingredients. These compositions can be used for the enrichment, fortification and/or coloration of food beverages, animal feed and/or cosmetics. The present invention also refers to the preparation of such compositions. The present invention furthermore refers to a process for the manufacture of a beverage by mixing the compositions with ingredients of beverages. The present invention also refers to beverages obtainable by this process.

Compositions to enrich, fortify or color food, beverages, animal feed or cosmetics which contain fat-soluble active ingredients, for example beta-carotene, are known in the art. Beta-Carotene is a preferable colorant compound due to its intense and for the above-mentioned applications very pleasing orange color. Since the final compositions are usually aqueous compositions such as beverages, additional compounds have to be added to compositions for the enrichment, fortification and/or coloration to avoid separation of fat (oil) phases from the product, which would render the corresponding product unacceptable.

Therefore, fat-soluble active ingredients are often combined with auxiliary compounds, such as starches or fish gelatin, in order to prevent phase separation in the final aqueous composition. Those auxiliary compounds, however, often have a negative influence on the color properties and the nutritional properties of the final products. It is therefore desired to develop new compositions of fat-soluble active ingredients, which contain improved auxiliary compounds, which have very good properties referring to taste, emulsification, emulsion stability, film forming ability and/or color of the composition.

Proteins have been used as emulsifiers in food products for many years [E. Dickinson, D.J. McClements, Molecular basis of protein functionality, in: E. Dickinson, D.J. McClements (Eds.), Advances in Food Colloids, Blackie Academic & Professional, London, UK, 1995, pp. 26-79]. However, the emulsification capacity may be lost at or near the isoelectric point, i.e. at a certain protein specific pH at which the net charges and solubility of the particular protein are minimal. Furthermore the emulsion stability decreases due to the screening of the electrostatic repulsion of protein in the presence of high concentration of salts. Most proteins have an isoelectric point below pH 7. Most foods and beverages are acidic; therefore the poor emulsion stability at the isoelectric point limits the applicability of proteins in food and beverage industries.

The stability of protein containing oil-in-water emulsions depends strongly on the charge density and structure of the emulsifier adsorbed on the emulsion droplet surface. The protein adsorption layers prevent the drop-drop coalescence by stabilizing the emulsion films. However, protein-stabilized emulsions are highly sensitive to environmental stresses such as pH and ionic strength [Rungnaphar Pongsawatmanit, Thepkunya Harnsilawat, David J. McClements, Colloids and Surfaces A: Physicochem. Eng. Aspects, 287, 59-67, 2006]. When the aqueous pH approaches the isoelectric point of a protein and/or the salt concentration is high, the electrostatic repulsion of the protein layers decreases and, therefore, protein precipitation, emulsion droplet coalescence and creaming occur [Eric Dickinson Soft Matter, 2008, 4, 932-942].
Proteins as emulsifiers do not function effectively at pH values close to their isoelectric point because they precipitate [N.G. Diftisa, C.G. Biliaderisb, V.D. Kiosseoglou, Food Hydrocolloids 19 (2005) 1025-1031].

The emulsion stability may be improved by forming protein-polysaccharide conjugates produced through covalent binding [Eric Dickinson Soft Matter, 2008, 4, 932-942]. The protein-polysaccharide conjugates have improved emulsifying and steric stabilizing properties, especially under conditions where the protein alone has poor solubility [Eric Dickinson Soft Matter, 2008, 4, 932-942].

The improvement of emulsifying properties of soybean protein by conjugation with polysaccharide has also been reported [N. Diftis and V. Kiosseoglou, FoodChemistry, 81, 1, 2003; N. Diftis and V. Kiosseoglou, Food Hydrocolloids, 20, 787, 2006; N.G. Diftis, et al., Food Hydrocolloids, 19, 1025, 2005; N. Diftis and V. Kiosseoglou, Food Chemistry, 96, 228]. Protein-polysaccharide conjugations can improve emulsifying properties of proteins, especially through oil droplet size reduction and emulsion stabilization. These conjugates can be produced by Maillard-type reactions between protein and polysaccharide, or by other reactions. The conjugates are adsorbed at the interface together with unreacted protein constituents, enhancing steric stabilization forces of oil droplets. However, the emulsion stability of the protein-polysaccharide conjugate around isoelectric point remains inadequate for use in food and beverage applications and protein emulsifiers in food and beverage applications remain an issue.

Therefore, there is still a need for compositions of fat-soluble active ingredients for the enrichment, fortification and/or coloration of food, beverages, animal feed, cosmetics or pharmaceutical compositions which do not show the above-mentioned problems.

It was therefore an objective of the present invention to provide compositions of fat-soluble active ingredients having the desired properties as indicated above, e.g. very good properties referring to optical clarity and emulsion stability and/or an improved color intensity and color stability (wherever applicable). It was also an objective of the invention to improve the process for the preparation of compositions of fat-soluble active ingredients for example by using different emulsification techniques.

This objective has been solved by a composition comprising
a) one or more fat-soluble active ingredients;
b) one or more protein(s) chosen from the group of proteins suitable for food application; and
c) one or more polysaccharide(s);
wherein the weight ratio of protein(s) to polysaccharide(s) is chosen like 1 : b with the proviso that b is equal to or larger than 5.

It is assumed that one main reason for the poor emulsion stability of the compositions of the prior art is that the weight ratio of protein to polysaccharide is too low. The highest weight ratio of protein to polysaccharide reported was 1:4 [S. Mishra, et al., Food Hydrocolloids 15, 9, 2001; N.G. Diftis, et al., Food Hydrocolloids 19, 1025, 2005; N. Diftis and V. Kiosseoglou, Food Hydrocolloids 20, 787-792, 2006; N. Diftis, V. Kiosseoglou, Food Chemistry 96 (2006) 228-233; M. Akhtar and E. Dickinson, Food Hydrocolloids, 21, 607, 2007]. It has surprisingly been found that by increasing the weight ratio to 1:5 or higher a stable emulsion is built, in which the protein does not precipitate at the isoelectric point pH and which may be produced even under high ionic strength.

As used herein, the term "fat-soluble active ingredient" refers to vitamins selected from the group consisting of vitamin A, D, E, K and derivatives thereof; polyunsaturated fatty acids; lipophilic health ingredients; carotenoids; and flavoring or aroma substances as well as mixtures thereof.

Polyunsaturated fatty acids (PUFAs), which are suitable according to the present invention, are mono- or polyunsaturated carboxylic acids having preferably 16 to 24 carbon atoms and, in particular, 1 to 6 double bonds, preferably having 4 or 5 or 6 double bonds.

The unsaturated fatty acids can belong both to the n-6 series and to the n-3 series. Preferred examples of n-3 polyunsaturated acids are eicosapenta-5,8,11,14,17-enoic acid and docosahexa-4,7,10,13,16,19-enoic acid; preferred examples of a n-6 polyunsaturated acid are arachidonic acid and gamma linolenic acid.

Preferred derivatives of the polyunsaturated fatty acids are their esters, for example glycerides and, in particular, triglycerides; particularly preferably the ethyl esters. Triglycerides of n-3 and n-6 polyunsaturated fatty acids are especially preferred.

The triglycerides can contain 3 uniform unsaturated fatty acids or 2 or 3 different unsaturated fatty acids. They may also partly contain saturated fatty acids.

When the derivatives are triglycerides, normally three different n-3 polyunsaturated fatty acids are esterified with glycerin. In one preferred embodiment of the present invention triglycerides are used, whereby 30 % of the fatty acid part are n-3 fatty acids and of these 25 % are long-chain polyunsaturated fatty acids. In a further preferred embodiment commercially available ROPUFA® '30' n-3 Food Oil (DSM Nutritional Products Ltd, Kaiseraugst, Switzerland) is used.

In another preferred embodiment of the present invention, the PUFA ester is ROPUFA^{®} '75' n-3 EE. ROPUFA '75' n-3 EE is refined marine oil in form of an ethyl ester with minimum content of 72 % n-3 fatty acid ethyl ester. It is stabilized with mixed tocopherols, ascorbyl palmitate, citric acid and contains rosemary extract.

In another preferred embodiment of the present invention the PUFA ester is ROPUFA® '10' n-6 Oil, a refined evening primrose oil with minimum 9 % gamma linolenic acid which is stabilized DL-alpha-tocopherol and ascorbyl palmitate.

According to the present invention it can be advantageous to use naturally occurring oils (one ore more components) containing triglycerides of polyunsaturated fatty acids, for example marine oils (fish oils) and/or plant oils, but also oils extracted from fermented biomass or genetically modified plants

Preferred oils which comprise triglycerides of polyunsaturated fatty acids are olive oil, sunflower seed oil, evening primrose seed oil, borage oil, grape seed oil, soybean oil, groundnut oil, wheat germ oil, pumpkin seed oil, walnut oil, sesame seed oil, rapeseed oil (canola), blackcurrant seed oil, kiwifruit seed oil, oil from specific fungi and fish oils.

Preferred examples for polyunsaturated fatty acids are e.g. linoleic acid, linolenic acid, arachidonic acid, docosahexaenic acid, eicosapentaenic acid and the like.
According to the present invention preferred lipophilic health ingredients are resveratrol; ligusticum; ubichinones and/or ubiquinols (one or more components) selected from coenzyme Q 10 (also referred to as "CoQ10"), coenzyme Q 9, and/or their reduced forms (the corresponding ubiquinols); genistein and/or alpha-lipoic acid.

Especially preferred fat-soluble active ingredients of the invention are carotenoids, especially beta-carotene, lycopene, lutein, bixin, astaxanthin, apocarotenal, beta-apo-8'-carotenal, beta-apo-12'-carotenal, canthaxanthin, cryptoxanthin, citranaxanthin and zeaxanthin. Most preferred is beta-carotene.

In an preferred embodiment of the invention, the composition comprises between 0.1 and 70 weight-%, further preferred between 0.1 and 30 weight-%, further preferred between 0.5 and 20 weight-%, most preferred between 0.5 and 15 weight-% of one or more fat-soluble active ingredients, based on the total composition in dry matter.

According to the present invention preferred "proteins suitable for food application" are plant proteins. As used herein, the term "plant protein" refers to proteins derived from soy, lupin (e.g. L. albus, L. angustifolius or varieties thereof), pea and/or potato. The proteins may be isolated from any part of the plant, including fruits (like e.g. soy beans), seeds (including prepared or processed seeds) and the like; or from whole flour or defatted products such as shred, flakes etc.
Especially preferred is soy protein.

The term "polysaccharide" as used herein includes natural and modified polysaccharides, such as pectins, dextran, celluloses, cellulose derivatives, maltodextrin, starch and/or modified starch.

The term "modified polysaccharides" as used herein relates to polysaccharides which contain a lipophilic moiety, e. g. a hydrocarbon moiety having a chain length of preferably 5 to 18 carbon atoms in the straight chain. Preferably the modified polysaccharide should be acceptable for human consumption, i.e. preferred modified polysaccharides should be GRAS (generally recognized as safe) or approved for food consumption as determined by the various regulatory agencies world wide. A preferred modified polysaccharide is modified food starch.

The term "modified food starch" as used herein relates to modified starches that are made from starches substituted by known chemical methods with hydrophobic moieties. For example starch may be treated with cyclic dicarboxylic acid anhydrides such as succinic and/or glutaric anhydrides, substituted with an alkyl or alkenyl hydrocarbon group.

A preferred modified starch is starch sodium octenyl succinate ("OSA-starch"). OSA-starches may contain further hydrocolloids, such as starch, maltodextrin, carbohydrates, gum, corn syrup etc. and optionally any typical emulsifier (as co-emulgator), such as mono- and diglycerides of fatty acids, polyglycerol esters of fatty acids, lecithins, sorbitan monostearate, and plant fibre or sugar.
OSA-starches are commercially available e.g. from National Starch under the trade names HiCap 100, Capsul, Capsul HS, Purity Gum 2000, UNI-PURE, HYLON VII; from Roquette Freres ; from CereStar under the tradename C*EmCap or from Tate & Lyle.

It is preferred to choose the weight ratio of protein(s) to polysaccharide(s) like 1 : b with the proviso that b is equal to or larger than 5, especially preferred b is chosen from the range of from 5 to 15, more preferred from 8 to 15, most preferred from 8 to 10.

In an especially preferred embodiment of the present invention protein-polysaccharide conjugates are formed as a first step from the one or more proteins according to the invention and the one or more polysaccharides.

Accordingly, the invention also relates to a process for the manufacture of a composition as indicated above comprising the following steps (the process can be carried out using the ingredients in amounts as specified herein):
I) suspending the protein in water;
II) optionally removing not-dissolved protein from the suspension of step I);
III) mixing the polysaccharide in a weight ratio of protein(s) to polysaccharide(s) of from 1 : 5 to 1 : 15;
IV) optionally drying the mixture of step III);
V) heating the (dried) mixture at an appropriate temperature for a suitable time to form a conjugate;
VI) disperse the conjugate of step V) in an appropriate amount of water;
VII) adding the organic phase, comprising the one or more fat-soluble active ingredients to the conjugate;
VIII) emulsifying the mixture of step VII) with a conventional emulsification process known to the person skilled in the art.
IX) optionally drying the emulsion of step VIII).

The drying step may be carried out with any conventional drying process known to the person skilled in the art, preferred are spray drying and/or a powder catch process where sprayed suspension droplets are caught in a bed of an adsorbant such as starch or calcium silicate or silicic acid or calcium carbonate or mixtures thereof and subsequently dried.
The heating step and/or the optional drying step can induce Maillard-type reactions between the proteins and polysaccharides.

The conjugate of step V) may be used as it is or dried for later use.

It is furthermore preferred if the composition according to the invention additionally comprises one or more oligosaccharides, such as dextrins and maltodextrins, especially those having the range of 5 to 65 dextrose equivalents (DE), and glucose syrup, especially such having the range of 20 to 95 DE. The term "dextrose equivalent" (DE) denotes the degree of hydrolysis and is a measure of the amount of reducing sugar calculated as D-glucose based on dry weight; the scale is based on native starch having a DE close to 0 and glucose having a DE of 100. Preferably, maltodextrin is used in the composition according to the invention.

The present invention is also directed to the use of compositions as described above for the enrichment, fortification and/or coloration of food, beverages, animal feed and/or cosmetics, preferably for the enrichment, fortification and/or coloration of beverages.

Other aspects of the invention are food, beverages, animal feed, cosmetics containing a composition as described above.

Beverages wherein the product forms of the present invention can be used as a colorant or an additive ingredient can be carbonated beverages e.g., flavored seltzer waters, soft drinks or mineral drinks, as well as non-carbonated beverages e.g. flavored waters, fruit juices, fruit punches and concentrated forms of these beverages. They may be based on natural fruit or vegetable juices or on artificial flavors. Also included are alcoholic beverages and instant beverage powders. Besides, sugar containing beverages diet beverages with non-caloric and artificial sweeteners are also included.

Further, dairy products, obtained from natural sources or synthetic, are within the scope of the food products wherein the product forms of the present invention can be used as a colorant or as an additive ingredient. Typical examples of such products are milk drinks, ice cream, cheese, yogurt and the like. Milk replacing products such as soymilk drinks and tofu products are also comprised within this range of application.

Also included are sweets which contain the product forms of the present invention as a colorant or as an additive ingredient, such as confectionery products, candies, gums, desserts, e.g. ice cream, jellies, puddings, instant pudding powders and the like.

Also included are cereals, snacks, cookies, pasta, soups and sauces, mayonnaise, salad dressings and the like which contain the product forms of the present invention as a colorant or an additive ingredient. Furthermore, fruit preparations used for dairy and cereals are also included.

The final concentration of the one or more fat-soluble active ingredients, preferred carotenoids, especially beta-carotene, which is added via the compositions of the present invention to the food products may preferably be from 0.1 to 50 ppm, particularly from 1 to 30 ppm, more preferred 3 to 20 ppm, e.g. about 6 ppm, based on the total weight of the food composition and depending on the particular food product to be colored or fortified and the intended grade of coloration or fortification.

The food compositions of this invention are preferably obtained by adding to a food product the fat-soluble active ingredient in the form of a composition of this invention. For coloration or fortification of a food or a pharmaceutical product a composition of this invention can be used according to methods per se known for the application of water dispersible solid product forms.

In general the composition may be added either as an aqueous stock solution, a dry powder mix or a pre-blend with other suitable food ingredients according to the specific application. Mixing can be done e.g. using a dry powder blender, a low shear mixer, a high-pressure homogenizer or a high shear mixer depending on the formulation of the final application. As will be readily apparent such technicalities are within the skill of the expert.

The present invention is further illustrated by the following examples, which are not intended to be limiting.

### Examples:

### Materials

Soy protein is from Jilin Fuji Protein Co. Ltd. (Soyasour 4000K, acid soluble soy protein) with protein content 88% (dry basis). It has an isoelectric point around pH 4.7.
Egg ovalbumin (grade V) is from Sigma-Aldrich Corporation (St. Louis, MO).
Dextran (62 kDa) is a polysaccharide from GE healthcare (Formerly Amersham Pharmacia Biotech, Buckinghamshire, United Kingdom).

Maltrin 040 is from Grain Processing Corporation (Muscatine, Iowa). Maltrin 040 is a polysaccharide with a dextrose equivalent of 4 to 7.

### Preparation of protein-polysaccharide conjugate

Protein-polysaccharide conjugate can be prepared under solid state or solution condition.

### Solid state method:

Protein was suspended in water at an appropriate pH. Undissolved protein was removed (centrifugation at 10000 rpm for 15 minutes). The soluble protein was mixed with polysaccharide in an appropriate weight ratio (WR) and the mixture was dried (by lyophilization). The dried mixture was heated at an appropriate temperature and relative humidity (60 °C / 79%) for a suitable length of time to form the conjugate.

### Solution method:

Protein was suspended in water at an appropriate pH (pH 7 or 8). Undissolved protein was removed (centrifugation at 10000 rpm for 15 minutes). The soluble protein was mixed with polysaccharide in an appropriate weight ratio (WR) and heated at an appropriate temperature for a suitable length of time to form the conjugate. The conjugate can be used as it is or dried for later use.

### Preparation of the emulsion

Corn oil was added into a conjugate solution in an appropriate volume ration (VR). After pH adjustment, the mixture was pre-emulsified at room temperature with a homogenizer (FJ200-S, Shanghai Specimen Model Co., China) at 10000 rpm for 1 min, then immediately emulsified at room temperature using ultrasonication (Scientz-IID, Scientz Biotechnology Co., Ltd. Ningbo, China) at a power of 450 W for 6 min (on 2.5 s/off 2s).

### Particle Size Measurement

Freshly diluted emulsion samples were used for every dynamic light scattering (DLS) measurement. The measurements were carried out on a Malvern Autosizer 4700 (Malvern Instruments, Worcs, UK) equipped with a multi-τ digital time correlator (Malvern PCS7132) and a solid-state laser (Compass 315M-100, Coherent Inc.; output power = 100 mW, λ = 532 nm). The measurements were performed at 25 °C and a fixed scattering angle of 90°. The measured time correlation functions were analyzed by Automatic Program equipped with the correlator. The particle size (z-average hydrodynamic diameter) was obtained by CONTIN mode analysis. Two batches of samples were measured and averaged data was reported.

### Suppression of emulsion precipitation at or near isoelectric point

### Example 1

Emulsion stability at a weight ratio of protein(s) to polysaccharide(s) of 1:9 at various pH.

The soy protein was dispersed in water (22 mg/mL) at pH 8 and centrifuged (10'000 rpm) at room temperature for 15 min. The insoluble fraction of the protein at pH 8.2 was less than 10%. The supernatant was mixed with dextran with a weight ratio of protein to dextran in 1:9 (WR 1:9). The pH of the solutions was adjusted to 8 and then the solution was lyophilized. A portion of the dry powder was saved (Mixture) and another portion was heated at 60 °C and 79% relative humidity for 3 days to form the conjugate.
Corn oil (2.5 ml) was added into mixture or conjugate solution (10 ml; 15 mg protein/ml). The volume ratio (VR) of oil to conjugate solution was 1:4. The solution was pre-emulsified at room temperature with a homogenizer at 10'000 rpm for 1 min, then immediately emulsified at room temperature using ultrasonication at a power of 450 W for 6 min (on 2.5 s/off 2s). Particle size was determined after the emulsion was adjusted to various pH values.

**Table 1**

| Emulsion stability of a soy protein/dextran mixture (WR 1:9) and conjugate (WR 1:9) at various pH values. | | | | | | | |
|---|---|---|---|---|---|---|---|
| | **Particle Size, nm** | | | | | | |
| | pH 2 | pH 3 | pH 4 | pH 5 | pH 6 | pH 7 | pH 8 |
| Mixture | 859 | 1017 | precipitate | precipitate | precipitate | 706 | 626 |
| Conjugate | 469 | 575 | 582 | 584 | 547 | 549 | 481 |

Protein precipitation occurred in the emulsions prepared from the mixture at pH 4, 5 and 6, but not in those prepared from the conjugate. The emulsion stability or particle size of the emulsions prepared from the WR 1:9 mixture showed pH dependence, whereas the emulsion stability and particle size of the emulsions from the conjugate did not show significant pH dependence.

### Example 2

### Emulsion stability at a weight ratio of protein to dextran from 1:1 to 1:3 at various pH values.

The mixture and conjugate were prepared from acid soluble soy protein and dextran in a weight ratios of 1:1, 1:2 and 1:3. The pH of the solutions was adjusted to 7 or 8 and then the solutions were lyophilized. A portion of the dry powder was saved (Mixture) and another portion was heated at 60 °C and 79% relative humidity for 3, 9, 12 hrs to form the conjugate for WR 1:1, 1:2 and 1:3, respectively.

Corn oil (3.333 ml) was added into physical mixture or conjugate solution (10 ml; 20 mg protein/ml). The volume ratio (VR) of oil to conjugate solution was 1:3. The protein concentrations of the mixture and conjugate solution were 20 mg/ml. The solution was pre-emulsified with a homogenizer, immediately followed with ultrasonication. Particle size was determined after the emulsion was adjusted to various pH values (pH 3, 4, 5, 6 and 7).

**Table 2**

| Emulsion stability of soy protein/dextran mixtures (WR 1:1, WR 1:2 and WR 1:3) and conjugates (WR 1:1, WR 1:2 and WR 1:3) prepared at pH 7 or pH 8 and then adjusted to various pH values (pH 3, 4, 5, 6 and 7). | | | | | | | |
|---|---|---|---|---|---|---|---|
| | | | Particle Size, nm | | | | |
| | | | pH 3 | pH 4 | pH 5 | pH 6 | pH 7 |
| Mixture | pH 7 | WR 1:1 | 1662 | 2025 | 3122 | 2534 | 1320 |
| | | WR 1:2 | 1206 | 1398 | 2354 | 1937 | 1214 |
| | | WR 1:3 | 1164 | 1529 | 3757 | 2067 | 1228 |
| | pH 8 | WR 1:1 | 1134 | 1297 | 2608 | 1828 | 880 |
| | | WR 1:2 | 1127 | 1224 | 2604 | 1777 | 941 |
| | | WR 1:3 | 1149 | 1420 | 3865 | 1788 | 1139 |
| Conjugate | pH 7 | WR 1:1 (3 h) | 1483 | 1769 | 2639 | 2160 | 1157 |
| | | WR 1:2 (9 h) | 789 | 1029 | 1339 | 1168 | 680 |
| | | WR 1:3 (12 h) | 890 | 1057 | 1581 | 1134 | 747 |
| | pH 8 | WR 1:1 (3 h) | 1053 | 1401 | 2016 | 1476 | 741 |
| | | WR 1:2 (9 h) | 800 | 991 | 1436 | 1196 | 542 |
| | | WR 1:3 (12 h) | 986 | 1082 | 1473 | 1069 | 599 |

All emulsions prepared from the mixtures or conjugates showed pH dependence. The emulsions from the conjugate (WR 1:1 to WR 1:3) were not stable at pH near isoelectric point. Precipitation was observed in emulsions from mixture and conjugate at pH 4 and 5, which was close to isoelectric point of soy protein (pH 4.7).

### Example 3

### Emulsion stability of soy protein/dextran conjugate (WR 1:12) at various pH values

Protein and dextran with weight ratio of 1:12 were dissolved together in water. Protein concentration was 15 mg/ml. The mixture was adjusted to pH 8.30 and then was lyophilized. A portion of the lyophilized powder was saved (Mixture) and another portion was treated at 60 °C under 79% relative humidity for 4 days to form the conjugate. The conjugates were dissolved in water to reach protein concentrations of 15 mg/ml. Emulsions were prepared from protein/dextran physical mixtures and the conjugate, in which the weight ratio of protein to dextran was 1:12, the volume of the aqueous solution was 10 ml and corn oil was 2.5 ml. The solution was pre-emulsified with a homogenizer, immediately followed with ultrasonication.

**Table 3**

| Emulsion stability of WR 1:12 soy protein/dextran physical mixture and 1:12 conjugate at various pH values. | | | | | | | | |
|---|---|---|---|---|---|---|---|---|
| | **Particle Size, nm** | | | | | | | |
| | pH 1 | pH 2 | pH 3 | pH 4 | pH 5 | pH 6 | pH 7 | pH 8 |
| Mixture | 1224 | 1103 | 1220 | 3302 | 5621 | 4269 | 1283 | 895 |
| Conjugate | 1166 | 1158 | 1201 | 1248 | 1912 | 1150 | 649 | 627 |

All the emulsions prepared from the mixture or conjugate showed pH dependence. However, the conjugation effect could still be observed. Comparing with the mixture samples, the conjugate samples have smaller particle sizes, which indicate the protein aggregation occurred to a lesser extent. For soy protein, the emulsions prepared from 1:9 conjugate exhibit best stability.

### Tolerance of conjugate emulsion to high ionic strength

### Example 4

Effect of various ionic strengths on the stability of conjugate emulsions (NaCl added before emulsification).

The conjugate samples (WR 1:6 and WR 1:9) were prepared by heating treatment of the mixture for 50 h and 72 h, respectively.
The emulsions were prepared from WR 1:6 and 1:9 physical mixture or conjugate with various ionic strength (0.05 M, 0.10 M and 0.2 M NaCl) at pH 8.0, with 10 ml mixture or conjugate solution, and oil (3.3 ml oil for WR 1:6 and 2.5 ml oil for WR 1:9). The protein concentration was 20 mg/ml for WR 1:6 and 15 mg/ml for WR 1:9. For particle size measurements, the emulsions were diluted by the solution with the same pH and NaCl concentration.

**Table 4**

| Effect of various ionic strengths on the emulsion stability of soy protein/dextran conjugate emulsions (NaCl added before emulsification). | | | | |
|---|---|---|---|---|
| | Particle Size, nm | | | |
| | Mixture | | Conjugate | |
| | WR1:6 | WR1:9 | WR1:6 | WR1:9 |
| 0.05 M | 3190 | Precipitation | 920 | 515 |
| 0.10 M | Precipitation | Precipitation | 1087 | 562 |
| 0.20 M | Precipitation | Precipitation | 1075 | 606 |

For WR 1:6 and 1:9 physical mixtures, when NaCl concentration is 0.05 M, no precipitation appeared. Further increasing NaCl to 0.1 M, precipitation appeared. For the three conjugate solutions, no significant precipitation appeared at NaCl concentration of 0.05, 0.10 and 0.20 M.

### Example 5

Effect of various ionic strengths on the stability of soy protein/dextran conjugate emulsions (NaCl added after emulsification).

The conjugate samples (WR 1:6 and WR 1:9) were prepared by heating treatment of the mixture for 50 h and 72 h respectively.
The emulsions were prepared from WR 1:6 and 1:9 mixture or conjugate at pH 8.0, with 10 ml mixture or conjugate solution and oil (3.3 ml oil for WR 1:6 and 2.5 ml oil for WR 1:9). The protein concentration was 20 mg/ml for WR 1:6 and 15 mg/ml for WR 1:9. For DLS samples, the emulsions were diluted with various ionic strengths (0 M, 0.05 M, 0.10 M, 0.20 M NaCl) at pH 8.

**Table 5**

| Effect of various ionic strengths on the emulsion stability of soy protein/dextran conjugate emulsions (NaCl added after emulsification). | | | | |
|---|---|---|---|---|
| Ionic Strength | Particle Size, nm | | | |
| | Mixture | | Conjugate | |
| | WR 1:6 | WR 1:9 | WR 1:6 | WR 1:9 |
| 0 M | 803 | 647 | 522 | 419 |
| 0.05 M | Precipitation | Precipitation | 827 | 638 |
| 0.10 M | Precipitation | Precipitation | 1014 | 657 |
| 0.20 M | Precipitation | Precipitation | 1021 | 688 |

Precipitation occurred in the samples prepared from the physical mixture at ionic strength as low as 0.05M NaCl, whereas no significant precipitation was observed in the conjugate samples with ionic strength as high as 0.20 M NaCl. Examples 5 and 6 showed that the emulsions prepared from the conjugates (WR 1:9 and WR 1:6) have high tolerance to salt.

### Example 6

### Long-term stability of the emulsion prepared from conjugate in the presence of NaCl

The emulsions were prepared at pH 8.0 with 10 ml WR 1:9 conjugate solution and 2.5 ml oil. The protein concentration was 15 mg/ml in the conjugate solution. Particle size of the emulsion droplets was determined at the initial and after 4-month storage at 4 °C

**Table 6**

| Long term stability of soy protein/dextran conjugate emulsions (NaCl added after emulsification). | | | | |
|---|---|---|---|---|
| Ionic strength | Particle Size, nm | | | |
| | NaCl added before emulsifying | | NaCl added after emulsifying | |
| | Initial | 4 months | Initial | 4 months |
| 0 M | 419 | 500 | 419 | 500 |
| 0.05 M | 515 | 587 | 638 | 632 |
| 0.1 M | 562 | 712 | 657 | 694 |
| 0.2 M | 606 | 796 | 688 | 737 |

The small changes in particle size after 4-month storage indicated the high tolerance of the conjugate emulsion to salt.

### Example 7

### Preparation of ovalbumin/dextran conjugate and its emulsion stability at various pH values

Egg ovalbumin (ova) and dextran with weight ratio of 1:10 were dissolved together in water. Ova concentration was 15 mg/ml. The mixture was adjusted to pH 7.25 and then was lyophilized. The lyophilized powder was reacted at 60 °C under 79% relative humidity for 48 hr to prepare ovalbumin-dextran conjugate. The conjugate was dissolved in water to reach ova concentration of 15 mg/ml.
Emulsions were prepared from ova, ova/dextran physical mixture, and ova-dextran conjugate, in which the protein concentration was 15 mg/ml, the weight ratio of protein to dextran was 1:10, the volume of the aqueous solution was 10 ml and corn oil was 2.5 ml.
The mixture was pre-emulsified with a homogenizer, immediately followed by ultrasonication.
The emulsions prepared from ova or ova/dextran physical mixture were unstable; cream and serum appeared after storage. The emulsions prepared from the conjugate were stable. Particle size was determined after the emulsion was adjusted to a different pH.
The results show that the emulsions from ova/dextran conjugate is unaffected by pH change and, thus, ova/dextran conjugate is suitable for emulsion preparation.

**Table 7**

| Emulsion stability of ova/dextran conjugate (WR 1:10) at various pH values | | | | | | | |
|---|---|---|---|---|---|---|---|
| | **Particle Size, nm** | | | | | | |
| | pH 1 | pH 2 | pH 3 | pH 4 | pH 5 | pH 6 | pH 7 |
| Ovalbumin | * | * | * | * | * | * | * |
| Ovalbumin/dextran Mixture | * | * | * | * | * | * | * |
| Conjugates | 357 | 371 | 361 | 359 | 368 | 366 | 370 |

| | | | | | | | |
|---|---|---|---|---|---|---|---|
| * protein precipitation | | | | | | | |

### Example 8

### Preparation of soy protein/Maltrin conjugate and its emulsion stability at various pH values

Protein and Maltrin 040 with weight ratio of 1:9 were dissolved together in water. Protein concentration was 15 mg/ml. The Maltrin 040 does not dissolve well at this concentration.
The mixture was adjusted to pH 8.30 and then was lyophilized. The lyophilized powder was reacted at 60 °C under 79% relative humidity for 3 days to prepare protein-Maltrin conjugates. The conjugates were dissolved in water for 1 day. At the protein concentration of 15 mg/ml, the reaction product could not be dissolved completely.
Emulsions were prepared from protein/Maltrin physical mixture and protein-Maltrin conjugate, in which the protein concentration was 15 mg/ml, the weight ratio of protein to Maltrin was 1:9, the volume of the aqueous solution was 10 ml, and corn oil was 2.5 ml.
The mixture was pre-emulsified with a homogenizer, immediately followed by ultrasonication.
The emulsions were adjusted to different pH values. After dilution, particle size was determined.

**Table 8**

| Emulsion stability of soy protein/Maltrin conjugate at various pH values | | | | | | | | |
|---|---|---|---|---|---|---|---|---|
| | **Particle Size, nm** | | | | | | | |
| | pH 1 | pH 2 | pH 3 | pH 4 | pH 5 | pH 6 | pH 7 | pH 8 |
| Conjugated | 1504 | 1928 | 2429 | 2874 | 2870 | 1854 | 1838 | 1540 |

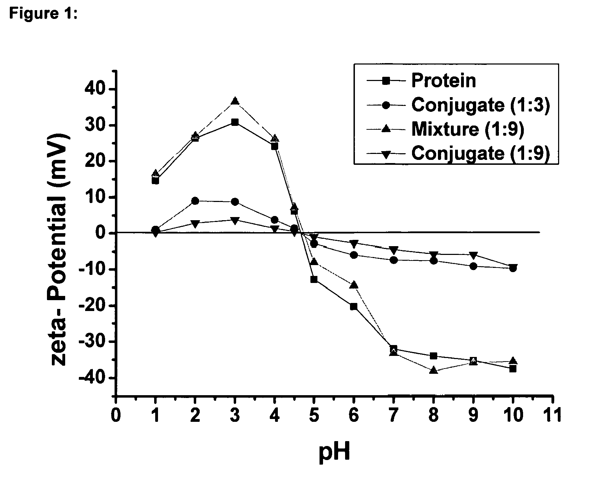

Figure 1 shows the zeta potentials of soy protein, soy protein/dextran mixture (WR 1:9), soy protein/dextran conjugate (WR 1:3 and WR 1:9).

Emulsions prepared as described above were adjusted to various pH values, and then were diluted with the same pH solution containing 5 mM NaCl to protein concentration of 0.0375 mg/mL. Zeta-potentials of the samples were measured on a ZetaSizer Nano ZS90 (Malvern Instrument, Worcs, UK).

**Table 9**

| pH dependence of ζ-potentials of the emulsions prepared from soy protein, WR 1:3 soy protein/dextran conjugate, WR 1:9 soy protein/dextran mixture and conjugate. | | | | |
|---|---|---|---|---|
| | ζ-potential (mv) | | | |
| | Protein | Mixture (1:9) | Conjugate (1:3) | Conjugate (1:9) |
| pH 1 | 14.7 | 16.6 | 1.1 | 0.3 |
| pH 2 | 26.5 | 27.1 | 9.1 | 3.0 |
| pH 3 | 31.0 | 36.7 | 8.9 | 3.9 |
| pH 4 | 24.3 | 26.3 | 3.9 | 1.5 |
| pH 4.5 | 6.3 | 7.4 | 1.5 | 0.6 |
| pH 5 | -12.7 | -7.9 | -2.8 | -0.9 |
| pH 6 | -20.2 | -14.4 | -5.9 | -2.7 |
| pH 7 | -32.0 | -33.2 | -7.4 | -4.4 |
| pH 8 | -34.0 | -38.1 | -7.6 | -5.7 |
| pH 9 | -35.2 | -35.8 | -9.1 | -5.8 |
| pH 10 | -37.5 | -35.5 | -9.7 | -9.3 |

Zeta-potential directly relates to the net charges on the surface of the macromolecules and particles. Zeta-potential results show that the structure of the emulsions prepared from the mixture is different from the structure of the emulsions prepared from the conjugates. This result indicates that dextran in the mixture does not affect the emulsion structure, and therefore, like the protein alone, the emulsion particles aggregate at pH around 4.7 where the positive charges and negative charges are about equal and maximum charge-charge attraction occurs. Conjugate emulsions are less sensitive to the pH and ionic strength. They appear to be stabilized primarily by steric hindrance of the surface polysaccharide.

### Example 9

The soy protein was dispersed in water (22 mg/mL) at pH 8 and centrifuged (10000 rpm) at room temperature for 15 min. The insoluble fraction of the protein at pH 8.2 was less than 10%. The supernatant was mixed with dextran with a weight ratio of protein to dextran in 1:9 (WR 1:9). The pH of the solution was adjusted to 8.0 and then the solution was lyophilized. A portion of the dry powder was saved (Mixture) and another portion was heated at 60 °C and 79% relative humidity for 3 days to form the conjugate.

Vitamin E oil (2.5 ml) was added into the protein solution or mixture or conjugate solution (10 ml; 15 mg protein/ml). The volume ratio (VR) of the oil to the aqueous solution was 1:4. The solution was pre-emulsified at room temperature with a homogenizer at 10000 rpm for 1 min, then immediately emulsified at room temperature using ultrasonication at a power of 450 W for 6 min (on 2.5 s/off 2s). Particle size was determined after the emulsion was adjusted to various pHs.

**Table 10**

| Vitamin E emulsion stabilized by soy protein/dextran mixture (WR 1:9) and conjugate (WR 1:9) at various pHs. | | | | | | |
|---|---|---|---|---|---|---|
| pH | ASSP ^{a} | | ASSP and dextran mixture ^{b} | | ASSP-dextran conjugate ^{c} | |
| | kcounts | Dₕ (nm) | kcounts | Dₕ (nm) | kcounts | Dₕ (nm) |
| 8 | 24 ± 1 | 536 ± 17 | 42 ± 1 | 756 ± 22 | 93 ± 5 | 809 ± 12 |
| 7 | 23 ± 1 | 508 ± 1 | 42 ± 3 | 719 ± 23 | 91 ± 2 | 773 ± 4 |
| 6 | 20 ± 1 | 7737 ± 1327 | 37 ± 2 | 4718 ± 458 | 90 ± 4 | 802 ± 2 |
| 5 | 24 ± 1 | 8865 ± 705 | 34 ± 1 | 5134 ± 154 | 93 ± 4 | 994 ± 32 |
| 4 | 25 ± 1 | 6356 ± 105 | 41 ± 2 | 3760 ± 659 | 101 ± 11 | 794 ± 13 |
| 3 | 22 ± 1 | 1400 ± 353 | 38 ± 1 | 1294 ± 1 | 89 ± 2 | 793 ± 6 |
| 2 | 21 ± 1 | 850 ± 101 | 39 ± 1 | 1001 ± 54 | 85 ± 1 | 765 ± 10 |
| 1 | 16 ± 2 | 860 ± 44 | 25 ± 1 | 3573 ± 280 | 66 ± 3 | 768 ± 26 |

| | | | | | | |
|---|---|---|---|---|---|---|
| ^{a,b} Precipitation occurred in the pH range of 1-7. ^{c} No precipitation was observed in all the samples of pH 1-8. | | | | | | |

## Claims

1. Composition comprising
a) one or more fat-soluble active ingredients;
b) one or more protein(s) chosen from the group of proteins suitable for food application; and
c) one or more polysaccharide(s);
wherein the weight ratio of protein(s) to polysaccharide(s) is chosen like 1 : b with the proviso that b is equal to or larger than 5.

2. Composition according to claim 1, **characterized in that** the fat-soluble active ingredient(s) (one or more compounds) are selected from the group consisting of vitamin A, D, E, K and derivatives thereof; polyunsaturated fatty acids; lipophilic health ingredients; carotenoids; and flavoring or aroma substances as well as mixtures thereof.

3. Composition according to any of the claims 1 or 2, **characterized in that** fat-soluble active ingredient(s) (one or more compounds) are carotenoids, especially beta-carotene, lycopene, lutein, bixin, astaxanthin, apocarotenal, beta-apo-8'-carotenal, beta-apo-12'-carotenal, canthaxanthin, cryptoxanthin, citranaxanthin and/or zeaxanthin.

4. Composition according to claim 2, **characterized in that** the lipophilic health ingredient(s) (one or more compounds) are selected from the group consisting of resveratrol; ligusticum; ubichinones and/or ubiquinols (one or more components), preferred coenzyme Q 10, coenzyme Q 9, and/or their reduced forms (the corresponding ubiquinols); genistein and alpha-lipoic acid.

5. Composition according to any of the preceding claims, **characterized in that** the proteins are plant protein(s) (one or more compounds) selected from the group consisting of soy protein, lupin protein, pea protein and potato protein.

6. Composition according to claim 5, **characterized in that** the plant proteins is soy protein.

7. Process for the manufacture of a composition as claimed in any of the claims 1 to 6 which comprises the following steps:
I) suspending the protein in water;
II) optionally removing not-dissolved protein from the suspension of step I);
III) mixing the polysaccharide in a weight ratio of protein(s) to polysaccharide(s) of from 1 : 5 to 1 : 15;
IV) optionally drying the mixture of step III);
V) heating the (dried) mixture at an appropriate temperature for a suitable time to form a conjugate;
VI) dispersing the conjugate of step V) in an appropriate amount of water;
VII) adding the organic phase, comprising the one or more fat-soluble active ingredients to the conjugate;
VIII) emulsifying the mixture of step VII) with a conventional emulsification process known to the person skilled in the art.
IX) optionally drying the emulsion of step VIII).

8. Process for the manufacture of a protein -polysaccharide conjugate which comprises the following steps:
I) suspending a protein in water;
II) optionally removing not-dissolved protein from the suspension of step I);
III) mixing a polysaccharide in a weight ratio of protein(s) to polysaccharide(s) of from 1 : 5 to 1 : 15;
IV) optionally drying the mixture of step III);
V) heating the (dried) mixture at an appropriate temperature for a suitable time to form a conjugate.

9. Protein-polysaccharide conjugate obtainable by a process according to claim 8.
